## Europäisches Patentamt
## European Patent Office
## Office européen des brevets

(11) Publication number: **0 252 200**
**A1**

# (12) EUROPEAN PATENT APPLICATION

(21) Application number: **86870100.4**

(22) Date of filing: **08.07.86**

(51) Int. Cl.4: **G02B 23/12** , G02B 27/00

(43) Date of publication of application:
**13.01.88 Bulletin 88/02**

(84) Designated Contracting States:
**BE**

(71) Applicant: **OIP OPTICS Naamloze Vennootschap**
**Meersstraat 138**
**B-9000 Gent(BE)**

(72) Inventor: **Brandt, G., Dr.**
**Hamse steenweg 79**
**B-9150 Grembergen(BE)**
Inventor: **Duprez, J., Ing.**
**Twaalfkameren 95**
**B-9000 Gent(BE)**
Inventor: **De Wilde, Ir. W., Dr.**
**Serafien de Rijckestraat 15**
**B-9720 De Pinte(BE)**
Inventor: **van den Berghe, M., Ing.**
**Wijgaard 37**
**B-9831 St.-Martens-Laten(BE)**

(74) Representative: **Donné, Eddy**
**M.F.J.Bockstael Arenbergstraat 13**
**B-2000 Anvers(BE)**

(54) **Night vision goggles.**

(57) Night vision goggles, characterized in that these goggles substantially consists in the combination of at least one objective part (1); at least one image intensifier tube (2), having an input side (7) on which an input image can be projected by the objective part (1), and having an output side (8) formed by a screen emitting an intensified output image of said input image within a narrow waveband emission spectrum; and two ocular parts (3, 4) each comprising the combination of at least one collimating holographic optical element (17; 18) and one beamsplitter optical element (15;16) with angular selectivity properties, these properties being used in combination with the characteristics of the emitted light of said screen.

Fig.1

## Night vision goggles.

This invention relates to biocular night vision goggles in which an image intensifier tube is used to get a bright image of a scene being at low to very low light level.

In order to obtain a bright image of a scene being at low light level several kinds of night vision goggles have already been proposed.

Night vision goggles of the bi-tube type consist of mainly three components namely an objective lens, an image intensifier tube and an ocular lens, which are lined up in front of each eye of the user. Each image intensifier tube has an input face on which an image of the scence is formed with an objective lens. At the output face of each of the image intensifier tubes the same image is formed with much higher brightness of the scene. The respective images at each of the output faces are collimated to the users eyes with said ocular lens.

Other conventional types of night vision goggles are, for obvious cost and weight saving reasons, made with one objective lens and one image intensifier tube. In these single tube types the image to both eyes is provided by optical means such as a beam splitting arrangement followed by a separate optical system for each eye.

Both said bi-tube and single-tube conventional goggles have, as a consequence of their construction, several inconveniences. First the center of gravity is located far in front of the users head, which results in an excessive turning moment acting on the head of the person using the goggles. Secondly, by failure of the image intensifier tube or at high light level, the user will be "blind". At high light level the image at the screen of the image intensifier tube will indeed show a blurring. This results in resolution loss or even, at still higher light levels, complete switching off of the tube. The optical components in front of the eyes will in such case cause a total obstruction of view and the only means in order to see again is to flap away or to pull off the goggles.

These inconveniences are overcome for a great deal by using an image intensifier tube with a narrow band phosphor (e.g. P43, P44, P55) at the screen in combination with a holographic optical element in each eye channel. Such lay out is described in the article "Systems engineering of an advanced holographic one-tube goggle" by Lacy G. Cook, published in SPIE PROCEEDINGS No 193, 1979, as well as in GB 2 100 466.

The working of these systems is based on the same principle as used for holographic head-up displays, e.g. as disclosed by US 3 940 204, in which the holographic optical element acts as a highly efficient combiner for the see-through or direct image and the image of a phosphor screen or intensified image.

Due to the use of said holographic optical elements, the user will always have an image of the real world, even by failure of the image intensifier tube or at high light level.

The holographic goggles disclosed by aforementioned article and by GB 2 100 466 however still have important shortcomings. The light energy emitted by the side bands of the phosphor of the screen of the image intensifier tube will be transmitted by the aforesaid holographic optical element, making the user of the goggles detectable even from large distances. Another disadvantage of said goggles is that the holographic optical element works in a strong off-axis optical system leading to image aberrations such as high distortion of the intensified image. Additionally the objective lens of the goggles is not at the same height of the eyes of the user. This gives a confusing image during nearby observations with holographic goggles of prior art.

For head-up displays it is known that adding additional holographic optical elements to the system could much improve the distortion characteristics and could lead to a compact lay-out. Such head-up displays are known of US 4.407.564 and are also described in "Volume phase holograms and their application to avionic displays" by B.H. Woodcock in SPIE PROCEEDINGS No 399, 1983.

The object of the invention is to develop improved night vision goggles which does present none of the disadvantages of the prior art night vision goggles.

Another object of the invention is to develop night vision goggles in which aforesaid technique of additional holographic optical elements can advantageously be used.

The night vision goggles according the invention are characterized in that they consist in the combination of at least one objective part; at least one image intensifier tube, having an input side on which an input image can be projected by the objective part, and having an output side formed by a screen emitting an intensified output image of said input image within a narrow waveband emission spectrum; and two ocular parts each comprising the combination of at least one collimating holographic optical element and one beamsplitter optical element with angular selectivity properties, these properties being used in combination with the characteristics of the emitted light of said screen. Preferably said beamsplitter optical elements consist in holographic optical elements or holograms, while for said screen a narrow waveband phosphor will be used.

The night vision goggles in accordance with the invention will now be described by way of an example with reference to the accompanied drawings in which :

figure 1 is a perspective representation of the optical lay out of the holographic night vision goggles;

figure 2 is a schematic representation in side view of the embodiment of figure 1;

figure 3 is a schematic representation in front view of the embodiment of figure 1;

figure 4 shows in detail the optical path of three chief rays for three different field directions;

figure 5 represents a typical emission spectrum of a narrow band phosphor;

figure 6 shows the reflection characteristics of the beamsplitter holographic optical element;

figure 7 shows the transmission characteristics of the same beamsplitter holographic optical element at the same point but at a different angle of incidence;

figure 8 shows an example of a holographic night vision goggles for head mounting realized in accordance to this invention.

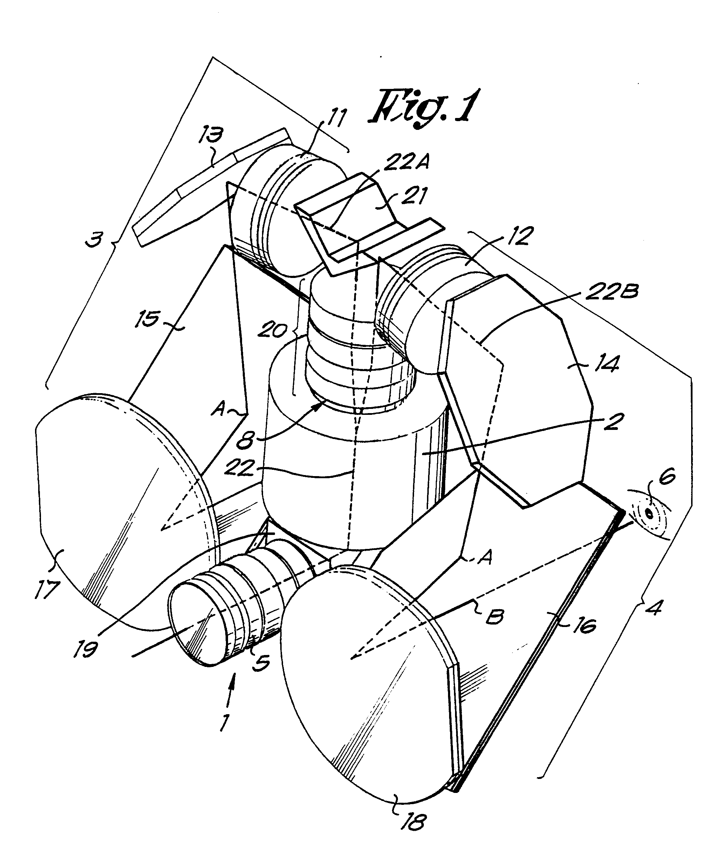

Referring to figures 1, 2 and 3 of the drawings, the goggles in this example are of the single-tube type.

As shown in the embodiment form of figure 1, the optical lay out of the night vision goggles mainly consists in an objective part 1, an image intensifier tube 2 and two ocular parts respectively 3 and 4.

The objective part 1 is substantially formed by one or more objective lenses 5, which according the invention preferably will be located at the same height as the users eyes 6.

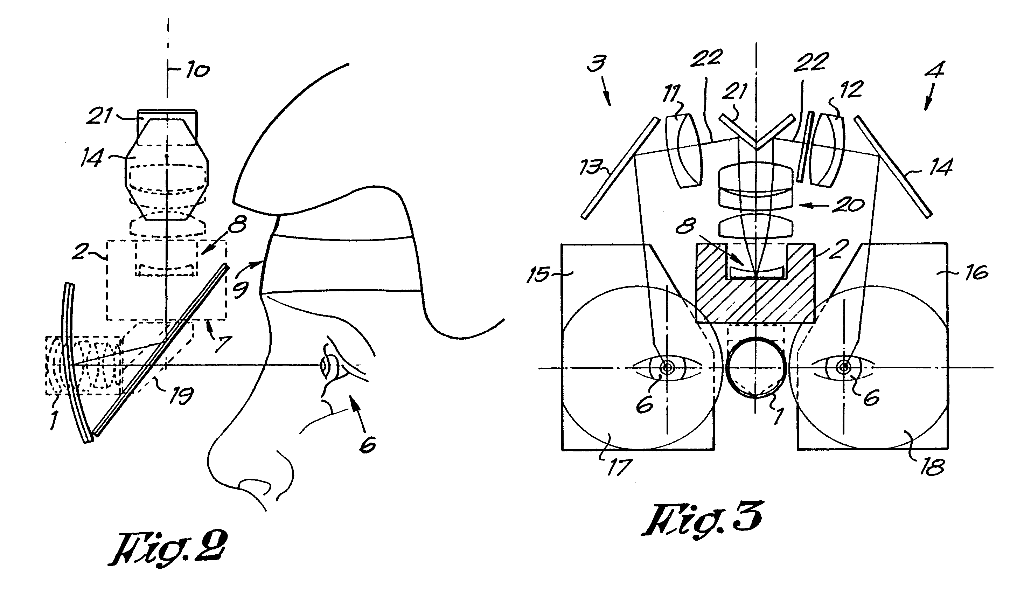

The image intensifier tube 2 comprises an input side 7 con sisting substantially in a photocathode and an output side 8, e.g. consisting in a phosphor screen. As illustrated on figures 1 and 2 the image intensifier tube 2 is located near to the front head 9 of the user and is placed with its axis 10 in vertical, or nearly vertical, direction.

Each of the ocular parts 3 and 4 are substantially consisting in an imaging lens, respectively 11 and 12; a side mirror, respectively 13 and 14; a beamsplitter optical element, respectively 15 and 16 and a collimating holographic optical element, respectively 17 and 18. The beamsplitter optical elements 15 and 16 are preferably of the holographic type having angular selectivity properties.

However these elements may also be made in a non-holographic way but having the same angular selectivity properties. These "properties" will still be explained hereafter.

Additionally the optical lay out of the figure 1 comprises a roof prism 19 placed between the objective part 1 and the image intensifier tube 2, a collimating lens 20 immediately placed after said screen of the output side 8, and a roof mirror 21 between the collimating lens 20 and said imaging lenses 11 and 12.

All aforesaid optical components will preferably be disposed according the configuration as shown in figure 1.

On each figure the optical chief ray 22 is drawn, corresponding with the straight forward looking by the user.

With the objective lenses 5 and through the roof prism 19 the scene is imaged on the photocathode of the input side 7 of the image intensifier tube 2. At the phosphor screen at the output side 8 the same image is formed with a much higher brightness. With the collimating lens 20 an image is formed at infinity.

After this collimating lens 20, the light way is splitted in a right and a left half by means of the roof mirrors 21. On each side of the goggles, the respectively light rays 22A and 22B passes through the separate ocular parts 3 and 4.

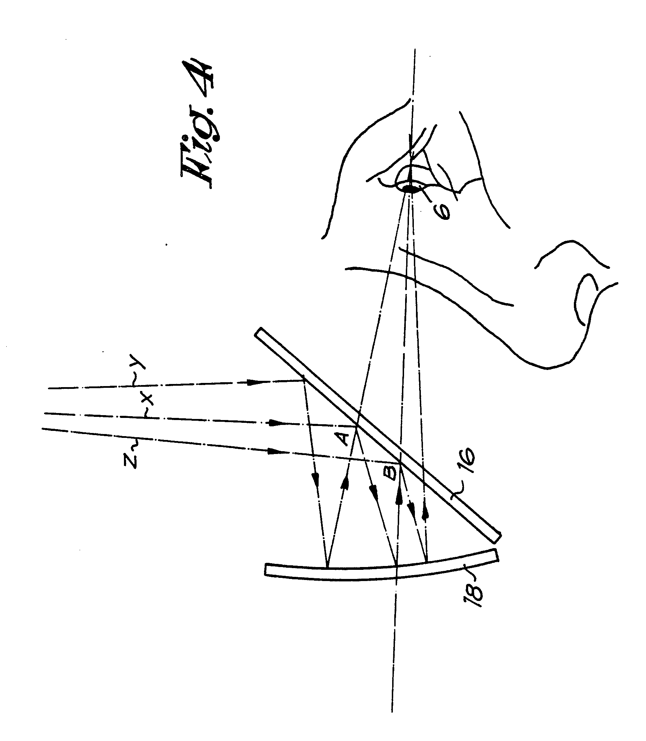

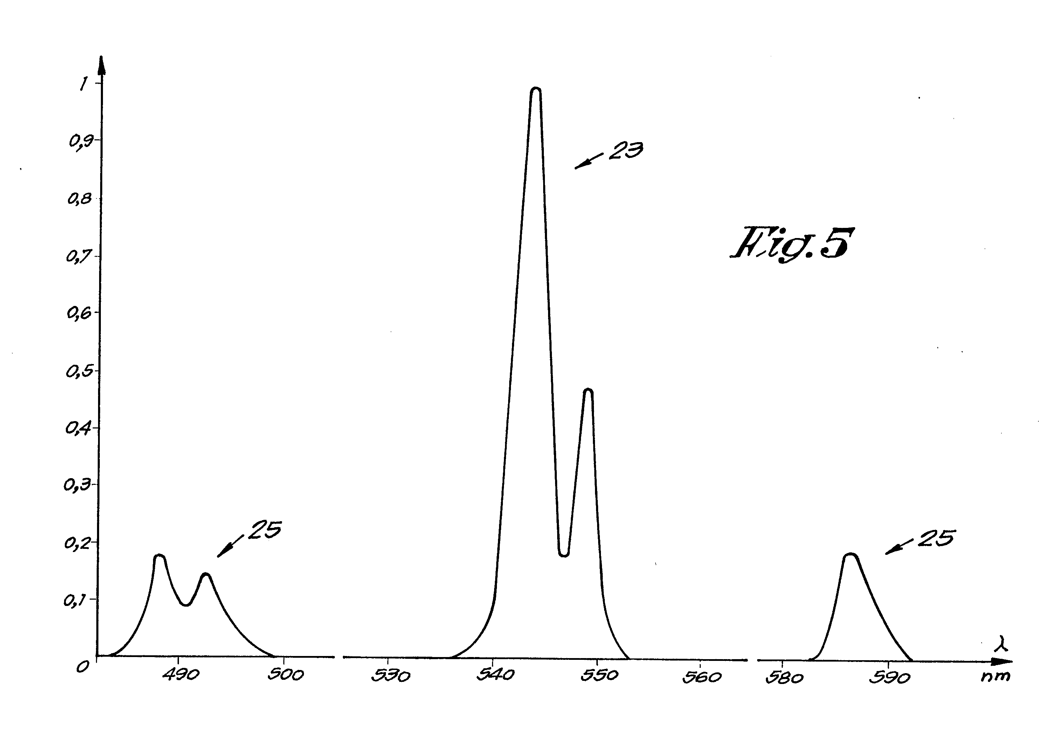

In each ocular part, respectively 3 and 4, the imaging lenses 11-12 forms an image inbetween the side mirrors 13-14 and the beamsplitter holographic optical elements 15-16. Through reflection on these optical elements 15-16 at points A, this image is collimated by the collimating holographic optical elements 17-18. The collimated beam passes through the beamsplitter holographic optical elements 15-16 at points B to reach the users eyes 6. Both elements, respectively 15-16 and 17-18, are constructed in such a way that the light of the phosphor screen passes with high efficiency through the ocular parts 3 and 4. This means that the collimating holographic optical elements 17-18 will have high reflectivity for the green phosphor light and that the beamsplitter holographic optical elements 15-16 have to combine a high reflectivity (at A) with a high transmission (at B). This is also illustrated on figure 4 of the drawings for different field directions (looking up and looking down). For giving the opportunity of the see-through capability both holographic optical elements also must have a high photopic transmission.

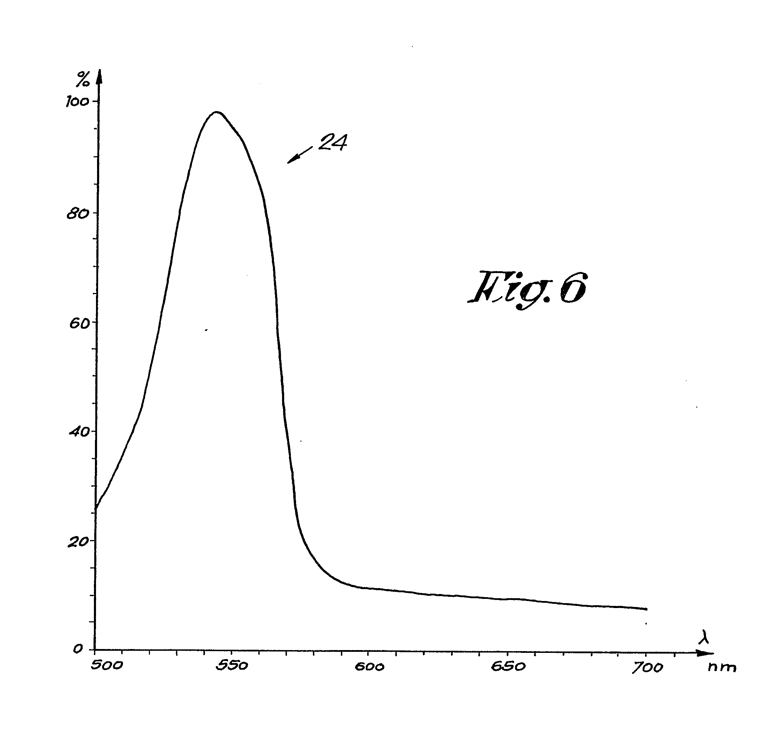

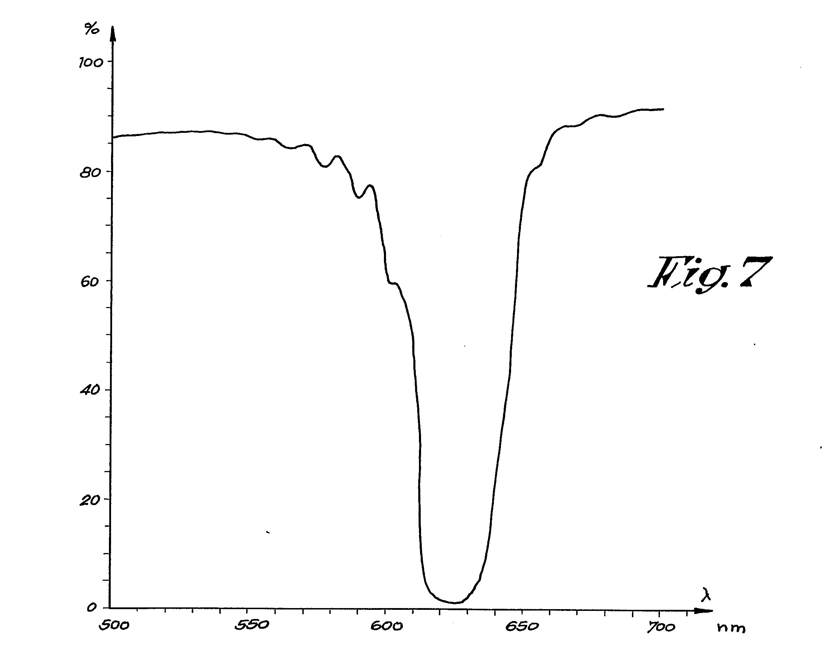

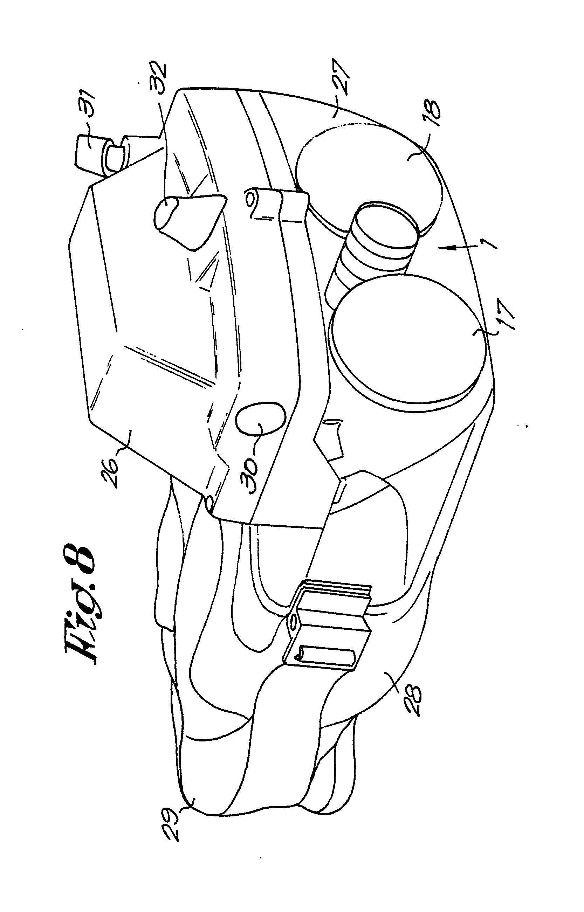

The combination of high reflectivity with high transmission of the beamsplitter holographic optical elements 15 and 16 however requires a narrowband phosphor for the screen of the image intensifier tube 2. A typical emission spectrum of such phosphor is shown on figure 5 of the drawings. The reflection characteristics of a beamsplitter holographic optical elements 15 or 16 at point A for light ray "X" (see figure 4) are shown at figure 6. It is clear that the energy of the central peak 23 in figures 5 of the phosphor light is reflected because it is centered at the same wave length as the reflection peak 24 at figure 6. The side-bands 25 of the phosphor, as shown in figure 5, are however not reflected and this energy passes downwards through the beamsplitter holographic optical elements 15 and 16. Light ray "Y", as shown in figure 3, reflects on the beamsplitter holographic optical elements 15 and 16 also at A. Transmission characteristics of the beamsplitter holographic optical elements 15 and 16 at A for ray "Y" (see figure 4) are shown on figure 7. We see that at the wavelength of central peak 23 of the phosphor (figure 5) the transmission is high. This combination of high reflectivity with high transmission in one point is possible because of the different angle of incidence for both light rays "X" and "Y" and is based on the well known angular selectivity of beamsplitter holographic optical elements. Such beamsplitter holographic optical elements or holograms are constructed in such a way that, at a given wavelength and at a given point, there is only high reflectivity at one defined angle of incidence; at all other angles of incidence, reflection is low and transmission is high.

The above reasoning is true for all points of the beamsplitter holographic optical elements 15 and 16 and thus for all field directions of the night vision goggles.

It is now clear that adding a holographic optical element, as explained in this invention, in each ocular part 3 and 4 of the night vision goggles leads to several advantages with respect to night vision goggles of prior art:
-the optical system works less off-axis leading to better image quality and certainly less distortion;
-the beamsplitter holographic optical elements 15 and 16 filters out the side bands 25 of the screen light, which are otherwise transmitted through the front or collimating holographic optical elements 17 and 18. This results in a much lower detectability in the dark; hence in military applications the wear of the goggles cannot be detected even by someone else also wearing night vision goggles;
-the application of more than one holographic optical element per ocular part 3 and 4 allows a much compacter lay out with the image intensifier tube 2 in a vertical position, resulting in the center of gravity of the goggles being very close to the front head 9 of the user;
-it also allows to have the objective lens 5 at the same height of the users eyes 6;
-the combination of more than one holographic optical element per ocular part 3 and 4 gives the opportunity to do specific image aberration corrections such as for chromatic aberration and distortion.

An example of a realisation of a holographic night vision goggles forehead-mounting in accordance to this invention is shown on figure 8. The complete optical system is housed in a plastic cover 26. The lower part of this cover or vi sor 27 is mainly transparent giving the user a panoramic see-through image largely exceeding the area of the holographic optical elements 15-18. A rubber mask 28 at the back side, provided with straps 29, gives a comfortable adaptation to the users face. Position of all components with respect to the users head are such that ordinary ophthalmic glasses can be worn, which allows the goggles to work with fixed diopter setting. Because of the large exit pupil of these goggles, adjustment of the IPD (interpupillary distance) is even not required.

Additionally references 30, 31 and 32 in figure 8 refer to a battery, an electrical switch and a focussing knob.

## Claims

1.-Night vision goggles, characterized in that these goggles substantially consists in the combination of at least one objective part (1); at least one image intensifier tube (2), having an input side (7) on which an input image can be projected by the objective part (1), and having an output side (8) formed by a screen emitting an intensified output image of said input image within a narrow waveband emission spectrum; and two ocular parts (3, 4) each comprising the combination of at least one collimating holographic optical element (17; 18) and one beamsplitter optical element (15;16) with angular selectivity properties, these properties being used in combination with the characteristics of the emitted light of said screen.

2.-Night vision goggles according to claim 1, characterized in that the beamsplitter optical elements (15; 16) with angular selectivity properties consists in holographic optical elements.

3.-Night vision goggles according to claim 1 or 2, characterized in that for the screen at the output side (8) of the image intensifier tube (2) a narrow waveband phosphor is used.

4.-Night vision goggles according to any one of the preceding claims, characterized in that the axis (10) of the image intensifier tube (2) is in vertical or nearly vertical direction by normal wearing position of the goggles.

5.-Night vision goggles according to any one of the preceding claims, characterized in that the objective lens (5) of the objective part (1) is located at substantially the same height as the users eyes (6).

6.-Night vision goggles according to anyone of the preceding claims, characterized in that the optical system is housed in a forehead-mounting, the visor (27) of this forehead mounting being mainly transparent giving the user a panoramic see-through image.

*Fig. 1*

0 252 200

*Fig.3*

*Fig.2*

Fig. 4

0 252 200

Fig.5

Fig.6

0 252 200

Fig. 7

Fig.8

0 252 200

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 134 116 (GEC AVIONICS LTD) <br> * Figure 1; abstract; page 4, lines 28-37; page 5, lines 1-10,16-18 * | 1,6 | G 02 B 23/12 <br> G 02 B 27/00 |
| Y | | 2,3 | |
| Y | GB-A-2 088 079 (ELLIOTT BROTHERS) <br> * Figure 1; abstract; page 1, lines 98-101,110-114,127-129; page 2, lines 1-8,21-27 * | 1-3 | |
| A | PROCEEDINGS OF THE INTERNATIONAL LENS DESIGN CONFERENCE, Mills College, Oakland, California, 31st May - 4th June 1980, SPIE vol. 237, pages 404-411, The Society of Photo-Optical Instrumentation Engineers, Washington, US; P.J. ROGERS: "A decade of development in passive night vision goggles" <br> * Figures 6-8 * | 5 | TECHNICAL FIELDS SEARCHED (Int. Cl.4) <br><br> G 02 B |

The present search report has been drawn up for all claims

| Place of search | Date of completion of the search | Examiner |
|---|---|---|
| THE HAGUE | 13-10-1987 | VAN DOREMALEN, J.C.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82